(19) **Europäisches Patentamt**
**European Patent Office**
**Office européen des brevets**

(11) **EP 1 755 932 B1**

(12) **FASCICULE DE BREVET EUROPEEN**

(45) Date de publication et mention
de la délivrance du brevet:
**08.09.2010 Bulletin 2010/36**

(51) Int Cl.:
**B60T 8/17** *(2006.01)*

(21) Numéro de dépôt: **05776389.8**

(86) Numéro de dépôt international:
**PCT/FR2005/050423**

(22) Date de dépôt: **07.06.2005**

(87) Numéro de publication internationale:
**WO 2005/123473 (29.12.2005 Gazette 2005/52)**

(54) **PROCEDE DE COMMANDE D'UN VEHICULE A QUATRE ROUES DIRECTRICES A L'AIDE D'UN DISPOSITIF DE FREINAGE INDIVIDUEL DES ROUES**

VERFAHREN ZUR STEUERUNG EINES FAHRZEUGES MIT SERVOLENKUNG MIT HILFE EINER EINZELRADBREMSVORRICHTUNG

METHOD FOR CONTROLLING A VEHICLE HAVING FOUR-WHEEL STEERING WITH THE AID OF AN INDIVIDUAL WHEEL BRAKING DEVICE

(84) Etats contractants désignés:
**AT BE BG CH CY CZ DE DK EE ES FI FR GB GR HU IE IS IT LI LT LU MC NL PL PT RO SE SI SK TR**

(30) Priorité: **08.06.2004 FR 0406158**

(43) Date de publication de la demande:
**28.02.2007 Bulletin 2007/09**

(73) Titulaire: **RENAULT S.A.S.**
**92100 Boulogne Billancourt (FR)**

(72) Inventeurs:
• **GUEGAN, Stéphane**
**F-78000 VERSAILLES (FR)**
• **POTHIN, Richard**
**F-78760 JOUARS PONCHARTRAIN (FR)**
• **BOUKHARI, Samir**
**F-78280 GUYANCOURT (FR)**

(56) Documents cités:
**EP-A- 0 999 117      DE-A- 10 236 331**
**DE-A- 19 643 197      US-A- 5 816 669**
**US-A1- 2002 189 889      US-A1- 2003 060 959**

**Description**

L'invention concerne la commande de véhicules à quatre roues directrices.

On connaît des véhicules équipés de quatre roues directrices en vue d'améliorer le comportement du véhicule, et par conséquent la sécurité des passagers du véhicule ainsi que le confort de conduite. Certains de ces véhicules sont dotés de surcroît d'un système de freinage pilotable permettant de freiner chacune des quatre roues individuellement. Ces véhicules comprennent ainsi un dispositif de pilotage de la direction des roues arrière au moins, un ou plusieurs capteurs permettant d'estimer la vitesse longitudinale du véhicule, un ou plusieurs moyens électroniques de calcul, un capteur d'angle du volant, et enfin un dispositif de freinage pilotable.

Plus précisément, le système de freinage pilotable, désigné ESP, est un dispositif d'urgence qui se déclenche lorsque la trajectoire réelle du véhicule présente un écart trop important avec une trajectoire de référence calculée par un calculateur de bord à partir d'un modèle basé sur l'angle du volant et la vitesse du véhicule. Ce système agit alors jusqu'à remettre le véhicule sur une trajectoire proche de celle estimée par le modèle, c'est-à-dire jusqu'à ce que le seuil de désactivation soit atteint. C'est ainsi qu'en cas de survirage, (c'est-à-dire lorsque la trajectoire a un rayon de courbure plus petit que celui de la trajectoire désirée), le système ESP cherche à freiner la roue avant extérieure. A l'inverse, en cas de sous virage, (c'est-à-dire lorsque la trajectoire s'étend à l'extérieur de la trajectoire escomptée), le système freine les quatre roues avec des efforts plus importants sur les roues intérieures, et agit également sur le couple moteur. Dans ces conditions, le système ESP crée un moment de lacet et une décélération qui permettent d'atteindre la trajectoire visée.

Toutefois, on ne peut exclure que le système d'orientation des roues ait subitement un fonctionnement défectueux lié par exemple à une coupure de puissance disponible sur le système ou à un défaut du calculateur. S'il s'ensuit un braquage non désiré des roues arrière, le véhicule peut devenir incontrôlable par le conducteur.

Il est connu de mettre en relation le système ESP et le système d'orientation des quatre roues directrices en mode de fonctionnement nominal. Toutefois, lorsque le système d'orientation des roues est défectueux, le système ESP, dans son fonctionnement nominal, ne permet pas de limiter de façon significative la gravité d'un braquage non désirée des roues arrière. On connaît ainsi différentes stratégies de contrôle d'un système d'orientation des roues lorsque le système est en situation de fonctionnement nominal. Une stratégie applicable au mode dégradé est divulguée par le document DE 19 643 197.

Un but de l'invention est de permettre de limiter de façon significative les conséquences d'un état défectueux du dispositif d'orientation des roues.

A cet effet, on prévoit selon l'invention un procédé de commande d'un véhicule, dans lequel :

-	lorsqu'on détecte qu'un écart de trajectoire dépasse un seuil prédéterminé, on commande la génération d'un premier couple de freinage sur une roue avant ; et
-	lorsqu'on détecte que l'écart dépasse le seuil et qu'un dispositif d'orientation de roues arrière est défectueux, on commande la génération sur une roue avant d'un deuxième couple de freinage différent du premier couple, le deuxième couple ($C_{esp}$) étant donné par la formule :

$$C_{esp} = C_{modèle} + C_{ff}$$

Où $C_{ff}$ est fonction d'une différence entre un angle de braquage mesuré ($\alpha_2$) et un angle de braquage de consigne ($\alpha_{2\ cons}$).

Comme on le verra dans la suite, ce procédé permet d'améliorer la stabilité du véhicule en cas de défaillance du système d'orientation des quatre roues. Il est particulièrement utile lorsque survient un braquage non désiré des roues arrière.

Dans un mode préféré de réalisation, le procédé est mis en oeuvre de la façon suivante. Cette mise en oeuvre se produit lorsqu'un état de panne est détecté sur le dispositif d'orientation des roues. Tout d'abord, on génère un couple de freinage pour amortir l'écart de trajectoire dû au braquage non désiré des roues arrière. On met ensuite en oeuvre une stratégie de freinage en deux temps.

a. Dans un premier temps, on applique un couple de freinage transitoire pour limiter le plus possible l'action de correction du conducteur pendant les premières secondes qui suivent la panne.
b. Passée une période de quelques secondes après le déclenchement de la panne, le couple de freinage est progressivement annulé. Les paramètres du dispositif de freinage individuel des roues sont en outre modifiés pour tenir compte de la nouvelle situation.

En fait, la stratégie ainsi mise en oeuvre peut se décomposer de la façon suivante :

- avertir le système de freinage d'un état de panne du système d'orientation des roues ;
- calculer un couple de freinage transitoire qui permet de réduire au mieux l'écart de trajectoire dû à la panne du système d'orientation des roues ; et
- adapter la calibration du système de correction de trajectoire (ESP) pour tenir compte de l'état de panne du système d'orientation des roues.

Le procédé selon l'invention pourra présenter en outre au moins l'une quelconque des caractéristiques suivantes :

- l'état défectueux fait partie du groupe constitué par :

  - un fonctionnement en mode dégradé ; et
  - une panne ;

- le deuxième couple est fonction de l'une au moins des données suivantes :

  - un empattement du véhicule ;
  - une rigidité de dérive avant ;
  - une rigidité de dérive arrière ;
  - un rayon d'une des roues ; et
  - une voie avant du véhicule ;

- $C_{ff}$ est donné par la formule :

$$C_{ff} = K_{ff}.\, d$$

Où : d est la différence entre l'angle mesuré et l'angle de consigne ; et

$$K_{ff} = [L.D1.D2 \, / \, (D1 + D2)] \times 2R \, / \, e$$

Où:

- L est un empattement du véhicule;
- D1 et D2 sont les rigidités de dérive avant et arrière respectivement ;
- R est un rayon d'une des roues ; et
- e est une voie avant du véhicule ;

- on commande la génération du deuxième couple de sorte que :

  - le deuxième couple ($C_{esp}$) a une valeur déterminée pendant une durée déterminée ; puis
  - le deuxième couple ($C_{esp}$) décroît à partir de cette valeur jusqu'à la valeur du premier couple ($C_{modèle}$) ;

- il comprend en outre l'étape consistant, après la génération du deuxième couple, à modifier au moins un paramètre d'un dispositif de commande du freinage individuel de chaque roue ; et
- le dispositif de commande de freinage étant agencé pour se déclencher lorsqu'une valeur prédéterminée franchit au moins un seuil prédéterminé, l'étape de modification comprend l'abaissement du seuil ou d'au moins l'un des seuils.

D'autres caractéristiques et avantages de l'invention apparaîtront encore dans la description suivante d'un mode préféré de mise en oeuvre donné à titre d'exemple non limitatif en référence aux dessins annexés sur lesquels :

- la figure 1 est un organigramme illustrant la stratégie dans le mode préféré de mise en oeuvre du procédé de l'invention ;
- la figure 2 est une courbe illustrant l'évolution au cours du temps du couple supplémentaire intervenant à la figure 1 ; et
- la figure 3 est une vue illustrant l'évolution de plusieurs angles de braquage au fil du temps.

On va décrire un mode préféré de mise en oeuvre du procédé de l'invention. Ce procédé est mis en oeuvre à bord d'un véhicule muni d'une part d'un dispositif d'orientation individuel des quatre roues du véhicule, à savoir aussi bien les deux roues avant que les deux roues arrière, et d'un système de pilotage individuel de freinage de chacune de ces quatre roues, de type ESP.

De façon classique, la stratégie mise en oeuvre par le système ESP en mode nominal a pour conséquence que, lorsque la trajectoire réelle du véhicule présente un écart trop important avec une trajectoire de référence calculée par le calculateur, le dispositif ESP génère un couple de freinage $C_{modèle}$ pour réduire cet écart. Il s'agit ici du couple appelé premier couple. Ce couple est exercé sur l'une des deux roues avant. Ce couple est calculé à partir de la grandeur appelée « consigne de braquage arrière pour la partie typage ».

Le dispositif d'orientation des roues est piloté de façon connue en elle-même. Lorsque ce dispositif fonctionne de façon nominale, c'est-à-dire de façon normale, la valeur de la variable transmise au calculateur du système selon l'invention vaut un. Ce calculateur est en l'espèce le calculateur du dispositif ESP.

Dans le présent exemple, le système d'orientation des roues est équipé de moyens de surveillance de son bon fonctionnement, qui permettent de détecter un état défectueux tel qu'une panne. Si cette panne ne permet plus le fonctionnement, même en mode dégradé, du système d'orientation des roues, la puissance alimentant ce système est mise à 0.

Deux situations peuvent alors se présenter qui sont fonction de l'actionneur mis en oeuvre dans ce système.

- si l'actionneur est de type irréversible, les roues arrière sont bloquées en position ;
- si l'actionneur est de type réversible et est équipé d'un système de rappel en position 0, les roues reviennent progressivement en position centrale et y sont bloquées.

Quoi qu'il en soit, lorsqu'un état défectueux est détecté, la valeur de la variable « état 4RD » transmise au calculateur du dispositif de freinage est mise à 0.

On rappelle pour information la nature des différents angles de braquage transmis par le dispositif d'orientation des roues au dispositif de freinage ESP :

- angle de braquage arrière pour la partie typage ($\alpha_{2typage}$);
- angle de braquage arrière pour la partie rejet de perturbation ($\alpha_{2\,RP}$); et
- angle de braquage arrière mesuré ($\alpha_2$).

Si la panne du système d'orientation des roues n'engendre pas de défaut de mesure de l'angle de braquage des roues arrière ($\alpha_2$), cette valeur est transmise au calculateur du dispositif de freinage.

Si, en revanche, la valeur $\alpha_2$ n'est plus connue du dispositif d'orientation des roues, une valeur FF est transmise au calculateur.

On rappelle par ailleurs que la valeur totale de la consigne de braquage ($\alpha_{2\,cons}$) est connue du calculateur de freinage comme étant la somme de $\alpha_{2\,RP}$ et de $\alpha_{2\,typage}$. De plus, lorsque « état 4 RD » vaut 0, les valeurs des angles de consigne sont figées à leur dernière valeur avant la panne.

Lorsque la variable « état 4 RD » transmise au calculateur vaut 0, le calculateur génère immédiatement un couple de freinage $C_{esp}$, appelé ici « deuxième couple », pour réduire autant que possible l'écart de trajectoire dû à la défaillance du dispositif d'orientation des roues. Il est entendu que la dénomination « deuxième couple » vise seulement à le distinguer du « premier couple » sachant qu'aucune chronologie ni aucun ordre entre les deux couples n'entre en jeu. Ce couple de freinage $C_{esp}$ peut se décomposer en deux parties, en étant donné par la formule :

$$C_{esp} = C_{modèle} + C_{ff}$$

En effet, pour réduire le plus rapidement possible l'écart de trajectoire généré par un braquage non désiré des roues arrière, un couple de freinage supplémentaire ($C_{ff}$) est appliqué sur une des roues avant du véhicule de la façon suivante.

Si la valeur $\alpha_2$ vaut la valeur FF, alors le couple $C_{FF}$ vaut 0.

Si, en revanche, la valeur $\alpha_2$ est différente de la valeur FF, alors trois cas peuvent survenir :

- si $\alpha_2 - \alpha_{2\,cons}$ est > 0, on applique sur la roue avant gauche le couple

$$C_{ff} = K_{ff}. (\alpha_2 - \alpha_{2\,cons}) \,;$$

- si $\alpha_2 - \alpha_{2\,cons}$ est < 0, on applique sur la roue avant droite le couple

$$C_{ff} = K_{ff}. (\alpha_2 - \alpha_{2\,cons}).$$

- si enfin $\alpha_2 - \alpha_{2\,cons} = 0$, alors $C_{FF} = 0$.

Dans ces formules, le coefficient $K_{ff}$ est donné par la formule :

$$K_{ff} = [L.D1.D2 / (D1 + D2)] \times 2R / e$$

Dans cette formule :

- L exprimé en mètres, est l'empattement du véhicule ;
- D1 et D2, exprimés en newtons par radian, désignent les rigidités de dérive avant et arrière respectivement ;
- R désigne le rayon d'une roue ; et
- e, exprimé en mètres, est la voie avant du véhicule, c'est-à-dire la distance entre la roue avant gauche et la roue avant droite.

On voit donc que, lorsque le système détecte un état défectueux du dispositif d'orientation des roues et un écart de trajectoire dépassant un seuil prédéterminé, il commande sur l'une des roues avant un couple de freinage $C_{esp}$. Ce couple est différent du couple $C_{modèle}$ dont la génération est commandée sur l'une des roues lorsqu'est détecté un écart de trajectoire trop important alors que le dispositif d'orientation des roues est en fonctionnement nominal.

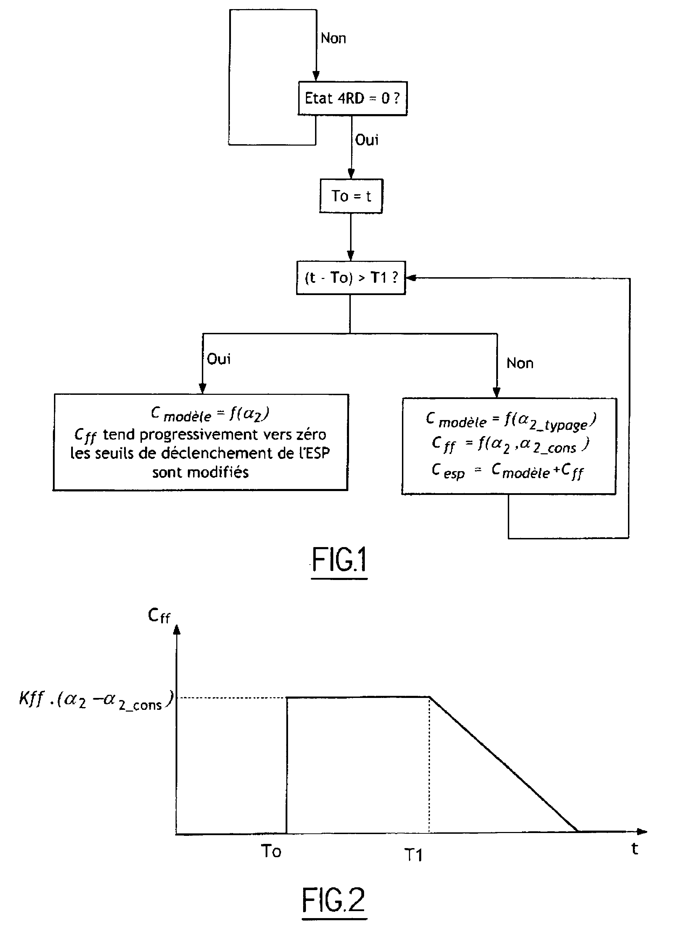

Le couple $C_{esp}$ est généré pendant une période T1 prédéterminée qui dure quelques secondes, par exemple 3 secondes. Dans l'organigramme de la figure 1, la date T0 désigne l'instant où la variable « état 4 RD » est mise à 0. Le couple $C_{esp}$ est donc généré pendant toute la période T1.

A l'issue de cette période, le calculateur commande le dispositif de freinage de sorte que le couple de freinage supplémentaire $C_{ff}$ est progressivement annulé. Ainsi, la valeur du deuxième couple décroît jusqu'à atteindre la valeur du premier couple. La courbe de l'évolution du couple $C_{ff}$ en fonction du temps illustrée à la figure 2 suit alors une portion rectiligne débutant à la valeur du couple à l'instant T1 et se terminant à une valeur nulle.

Par ailleurs, l'angle de braquage arrière alimentant le calculateur de l'ESP pour son modèle de référence passe progressivement de la valeur $\alpha_{2\,typage}$ à :

- la valeur $\alpha_2$ si $\alpha_2$ est différente de FF ;
- la dernière valeur connue de $\alpha_2$ si $\alpha_2 = FF$ et si l'actionneur est irréversible ; ou
- la valeur « valeur 0 » si $\alpha_2 = FF$ et si l'actionneur est réversible avec un système de rappel en position 0.

Enfin, le calculateur commande alors une réduction des seuils de déclenchement du système de freinage individuel des roues de façon à obtenir une réaction plus rapide de ce système en cas de sous virage ou de survirage qui surviendrait ultérieurement.

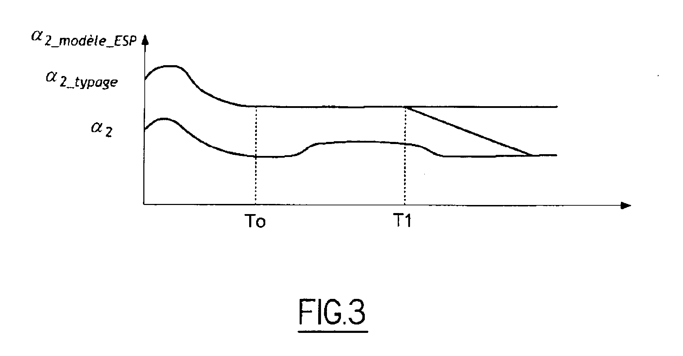

La figure 3 illustre l'évolution au cours du temps des trois grandeurs $\alpha_{2\,modèle}$ ESP, $\alpha_{2\,typage}$ et $\alpha_2$.

Bien entendu, on pourra apporter à l'invention de nombreuses modifications sans sortir du cadre de celle-ci, tel que défini par les revendications.

## Revendications

1. Procédé de commande d'un véhicule, comportant les étapes suivantes : - lorsqu'on détecte qu'un écart de trajectoire dépasse un seuil prédéterminé, on commande la génération d'un premier couple de freinage (Cmodèle) sur une roue avant ; et

- lorsqu'on détecte que l'écart dépasse le seuil et qu'un dispositif d'orientation de roues arrière est défectueux, on commande la génération sur une roue avant d'un deuxième couple de freinage ($C_{esp}$) différent du premier couple ($C_{modèle}$), **caractérisé en ce que** le deuxième couple ($C_{esp}$) est donné par la formule :

$$C_{esp} = C_{ff} + C_{modèle}$$

Où $C_{ff}$ est fonction d'une différence entre un angle de braquage mesuré ($\alpha_2$) et un angle de braquage de consigne ($\alpha_{2\,cons}$).

2. Procédé selon la revendication 1, **caractérisé en ce que** $C_{ff}$ est donné par la formule :

$$C_{ff} = K_{ff}.\,d$$

Où : d est la différence entre l'angle mesuré et l'angle de consigne ; et

$$K_{ff} = [L.D1.D2 / (D1 + D2)] \times 2R / e$$

Où :

- L est un empattement du véhicule;
- D1 et D2 sont les rigidités de dérive avant et arrière respectivement ;
- R est un rayon d'une des roues ; et
- e est une voie avant du véhicule.

3. Procédé selon la revendication 1, **caractérisé en ce que** l'état défectueux fait partie du groupe constitué par :

- un fonctionnement en mode dégradé ; et
- une panne.

4. Procédé selon l'une quelconque des revendications précédentes, **caractérisé en ce que** le deuxième couple ($C_{esp}$) est fonction de l'une au moins des données suivantes :

- un empattement du véhicule ;
- une rigidité de dérive avant ;
- une rigidité de dérive arrière ;
- un rayon d'une des roues ; et
- une voie avant du véhicule.

5. Procédé selon l'une quelconque des revendications précédentes, **caractérisé en ce qu'**on commande la génération du deuxième couple de sorte que :

- le deuxième couple ($C_{esp}$) a une valeur déterminée pendant une durée déterminée ; puis
- le deuxième couple ($C_{esp}$) décroît à partir de cette valeur jusqu'à la valeur du premier couple ($C_{modèle}$).

6. Procédé selon l'une quelconque des revendications précédentes, **caractérisé en ce qu'**il comprend en outre l'étape consistant, après la génération du deuxième couple, à modifier au moins un paramètre d'un dispositif de commande du freinage individuel de chaque roue.

7. Procédé selon la revendication précédente, **caractérisé en ce que**, le dispositif de commande de freinage étant agencé pour se déclencher lorsqu'une valeur prédéterminée franchit au moins un seuil prédéterminé, l'étape de modification comprend l'abaissement du seuil ou d'au moins l'un des seuils.

**Claims**

1. Method of controlling a vehicle, comprising the following steps:

   - when it is detected that a deviation in trajectory exceeds a predetermined threshold, the generation of a first braking torque ($C_{model}$) on a front wheel is instructed; and
   - when it is detected that the deviation exceeds the threshold and that a device for orienting the rear wheels is defective, then the generation on a front wheel of a second braking torque ($C_{esp}$) different from the first torque ($C_{model}$) is instructed, **characterized in that** the second torque ($C_{esp}$) is given by the formula:

$$C_{esp} = C_{ff} + C_{model}$$

   Where $C_{ff}$ is dependent on a difference between a measured angle of lock ($\alpha_2$) and a preset angle of lock ($\alpha_{2cons}$).

2. Method according to Claim 1, **characterized in that** $C_{ff}$ is given by the formula:

$$C_{ff} = K_{ff}.d$$

   Where: d is the difference between the measured angle and the preset angle;
   and

$$K_{ff}=[L.D1.D2/(D1+D2)] \times 2R / e$$

   Where:

   - L is a wheelbase of the vehicle;
   - D1 and D2 are the front and rear drift stiffnesses respectively;
   - R is a radius of one of the wheels; and
   - e is a front track of the vehicle.

3. Method according to Claim 1, **characterized in that** the defective state forms part of the group consisting of:

   - operation in degraded mode; and
   - a fault.

4. Method according to any one of the preceding claims, **characterized in that** the second torque ($C_{esp}$) is dependent on one at least of the following data:

   - a wheelbase of the vehicle;
   - a front drift stiffness;
   - a rear drift stiffness;
   - a radius of one of the wheels; and
   - a front track of the vehicle.

5. Method according to any one of the preceding claims, **characterized in that** the generation of the second torque is instructed in such a way that:

   - the second torque ($C_{esp}$) has a determined value for a determined duration; then
   - the second torque ($C_{esp}$) decreases from this value down to the value of the first torque ($C_{model}$).

6. Method according to any one of the preceding claims, **characterized in that** it furthermore comprises the step consisting, after the generation of the second torque, in modifying at least one parameter of a device for controlling the individual braking of each wheel.

7. Method according to the preceding claim, **characterized in that**, the braking control device being devised so as to be triggered when a predetermined value oversteps at least one predetermined threshold, the modification step comprises the lowering of the threshold or of at least one of the thresholds.

**Patentansprüche**

1. Verfahren zur Steuerung eines Fahrzeugs, das die folgenden Schritte aufweist:

   - wenn festgestellt wird, dass eine Streckenabweichung eine vorbestimmte Schwelle überschreitet, wird die Erzeugung eines ersten Bremsmoments ($C_{modèle}$) an einem Vorderrad gesteuert; und
   - wenn festgestellt wird, dass die Abweichung die Schwelle überschreitet und eine Vorrichtung zur Ausrichtung von Hinterrädern defekt ist, wird die Erzeugung, an einem Vorderrad, eines zweiten Bremsmoments ($C_{esp}$) anders als das erste Bremsmoment ($C_{modèle}$) gesteuert,

   **dadurch gekennzeichnet, dass** das zweite Moment ($C_{esp}$) durch die folgende Formel vorgegeben wird:

   $$C_{esp} = C_{ff} + C_{modèle}$$

   wobei $C_{ff}$ von einer Differenz zwischen einem gemessenen Einschlagwinkel ($\alpha_2$) und einem Solleinschlagwinkel ($\alpha_{2cons}$) abhängt.

2. Verfahren nach Anspruch 1, **dadurch gekennzeichnet, dass** $C_{ff}$ durch die folgende Formel vorgegeben wird:

   $$C_{ff} = K_{ff}.d$$

   wobei: d die Differenz zwischen dem gemessenen Winkel und dem Sollwinkel ist; und

   $$K_{ff} = [L.D1.D2/(D1 + D2)] \times 2R/e$$

   wobei:

   - L ein Achsabstand des Fahrzeugs ist;
   - D1 und D2 die vorderen bzw. hinteren Driftsteifigkeiten sind;
   - R ein Radius eines der Räder ist; und
   - e eine vordere Spurbreite des Fahrzeugs ist.

3. Verfahren nach Anspruch 1, **dadurch gekennzeichnet, dass** der defekte Zustand Teil der Gruppe ist, die besteht aus:

   - einem Notlaufbetrieb; und
   - einer Störung.

4. Verfahren nach einem der vorhergehenden Ansprüche, **dadurch gekennzeichnet, dass** das zweite Moment ($C_{esp}$) von mindestens einer der folgenden Angaben abhängt:

   - einem Achsabstand des Fahrzeugs;
   - einer vorderen Driftsteifigkeit;
   - einer hinteren Driftsteifigkeit;
   - einem Radius eines der Räder; und
   - einer vorderen Spurbreite des Fahrzeugs.

**5.** Verfahren nach einem der vorhergehenden Ansprüche, **dadurch gekennzeichnet, dass** die Erzeugung des zweiten Moments so gesteuert wird, dass:

- das zweite Moment ($C_{esp}$) während einer bestimmten Zeitdauer einen bestimmten Wert hat; dann
- das zweite Moment ($C_{esp}$) ausgehend von diesem Wert bis zum Wert des ersten Moments ($C_{modèle}$) abnimmt.

**6.** Verfahren nach einem der vorhergehenden Ansprüche, **dadurch gekennzeichnet, dass** es außerdem den Schritt enthält, der darin besteht, nach der Erzeugung des zweiten Moments mindestens einen Parameter einer Steuervorrichtung der Einzelbremsung jedes Rads zu verändern.

**7.** Verfahren nach dem vorhergehenden Anspruch, **dadurch gekennzeichnet, dass** die Bremssteuervorrichtung eingerichtet ist, um ausgelöst zu werden, wenn ein vorbestimmter Wert mindestens eine vorbestimmte Schwelle überschreitet, wobei der Schritt der Veränderung das Absenken der Schwelle oder mindestens einer der Schwellen enthält.

Non

Etat 4RD = 0 ?

Oui

To = t

(t - To) > T1 ?

Oui

Non

$C_{modèle} = f(\alpha_2)$
$C_{ff}$ tend progressivement vers zéro
les seuils de déclenchement de l'ESP
sont modifiés

$C_{modèle} = f(\alpha_{2\_typage})$
$C_{ff} = f(\alpha_2, \alpha_{2\_cons})$
$C_{esp} = C_{modèle} + C_{ff}$

## FIG.1

$C_{ff}$

$Kff \cdot (\alpha_2 - \alpha_{2\_cons})$

To

T1

t

## FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19643197